# EUROPÄISCHE PATENTSCHRIFT

(11) **EP 3 792 934 B1**
(45) Veröffentlichungstag und Bekanntmachung des Hinweises auf die Patenterteilung: **12.01.2022**
(21) Anmeldenummer: 19197549.9
(22) Anmeldetag: 16.09.2019
(51) Int. Cl.: G21F 5/008, G21F 5/06, G21F 5/12

(54) **VERFAHREN ZUR TROCKNUNG VON TRANSPORT- UND/ODER LAGERBEHÄLTERN UND TRANSPORT- UND/ODER LAGERBEHÄLTER**
TRANSPORT AND / OR STORAGE CONTAINER AND METHOD FOR DRYING TRANSPORT AND / OR STORAGE CONTAINERS
PROCÉDÉ DE SÉCHAGE DES RÉCIPIENTS DE TRANSPORT ET / OU DE STOCKAGE ET RÉCIPIENT DE TRANSPORT ET / OU DE STOCKAGE

(43) Veröffentlichungstag der Anmeldung: 17.03.2021
(73) Patentinhaber: GNS Gesellschaft für Nuklear-Service mbH, 45127 Essen (DE)
(72) Erfinder: Rirschl, Christoph, 44653 Herne (DE)
(74) Vertreter: Andrejewski - Honke Patent- und Rechtsanwälte Partnerschaft mbB

(56) Entgegenhaltungen:
- EP-A1- 0 223 997
- EP-A1- 0 895 250
- DE-A1- 2 856 243
- RU-C2- 2 238 599
- US-A1- 2008 075 223

## Beschreibung

Die Erfindung betrifft ein Verfahren zur Trocknung von Transport- und/oder Lagerbehältern für radioaktive Abfälle, insbesondere für abgebrannte Brennelemente, wobei der Behälter zunächst entwässert bzw. mechanisch entwässert wird. Die Erfindung betrifft weiterhin einen entsprechenden Transport- und/oder Lagerbehälter. - Nachfolgend wird anstelle des Begriffes Transport- und/oder Lagerbehälter auch verkürzt der Begriff Behälter verwendet.

Verfahren der eingangs genannten Art zur Trocknung von Transport- und/oder Lagerbehältern sind aus der Praxis und aus dem Stand der Technik prinzipiell in verschiedenen Ausführungsformen bekannt. Behälter für abgebrannte Brennelemente werden in der Regel unter Wasser mit den abgebrannten Brennelementen beladen, weil Wasser ein effektives Abschirmungsmedium für entstehende Neutronen darstellt. Bei der weiteren Handhabung wird der Behälter normalerweise zunächst entwässert bzw. mechanisch entwässert. Anschließend wird das in dem Behälter noch verbliebene Wasser durch Trocknung, insbesondere durch Vakuumtrocknung aus dem Behälter entfernt. In der Regel ist es schwierig, einen Restgehalt an Wasser aus dem Behälter zu entfernen. Hierzu sind verschiedene Trocknungsmaßnahmen bekannt. US 2008/0075223 A1 beschreibt einen Container für radioaktive Materialien, bei dem Wasser im Bereich der Dichtung durch Vakuumtrocknung entfernt wird. Die Trocknung kann durch ein Trocknungsmittel unterstützt werden, das im Bereich der Dichtung angeordnet ist. EP 0 895 250 A1 betrifft einen Abschirmbehälter für den Transport und/oder die Lagerung abgebrannter Brennelemente. In den Behälterinnenraum kann ein Restfeuchteadsorber eingebracht werden. RU 2 238 599 C2 beschreibt ebenfalls einen Behälter für radioaktive Abfallstoffe. Die Trocknung des Behälterinnenraumes wird durch Anlegen eines Vakuums und durch Verwendung eines Trocknungsmittels realisiert. Das Trocknungsmittel wird dabei in speziellen Containern untergebracht. Die bekannten Trocknungsmaßnahmen sind aber teilweise aufwendig und insoweit auch kostspielig. Außerdem zeichnen sich einige dieser Trocknungsmaßnahmen durch eine unzureichende Trocknungseffizienz aus.

Demgegenüber liegt der Erfindung das technische Problem zugrunde, ein Verfahren der eingangs genannten Art anzugeben, mit dem auch Restmengen von Wasser aus einem Behälter problemlos entfernbar sind und das sich gleichzeitig durch Einfachheit, geringen Aufwand und eine hohe Trocknungseffizienz auszeichnet. Der Erfindung liegt weiterhin das technische Problem zugrunde, einen entsprechenden Transport- und/oder Lagerbehälter anzugeben.

Zur Lösung dieses technischen Problems lehrt die Erfindung ein Verfahren zur Trocknung von Transport- und/oder Lagerbehältern für radioaktive Abfälle, insbesondere für abgebrannte Brennelemente, gemäß Anspruch 1.

Erfindungsgemäß ist das feste Trocknungsmittel Calciumoxid. Zweckmäßigerweise wird pulverförmiges Calciumoxid als Trocknungsmittel eingesetzt. Es liegt im Rahmen der Erfindung, dass das Calciumoxid eine Schüttdichte von 800 bis 1.200 kg/m³ bei 20 °C aufweist.

Das erfindungsgemäße Verfahren wird bevorzugt für die Trocknung von Transport- und/oder Lagerbehältern mit abgebrannten Brennelementen eingesetzt. Das Verfahren eignet sich ganz besonders für Behälter mit höheren bzw. hohen Wärmeleistungen. Zweckmäßigerweise liegt die Wärmeleistung des Behälters zwischen 12,5 kW und 42 kW, insbesondere zwischen 15 kW und 40 kW und bevorzugt zwischen 20 kW und 40 kW, beispielsweise zwischen 25 kW und 40 kW. Gemäß einer Ausführungsform weist der Behälter eine Wärmeleistung bis 39 kW auf. In diesem Zusammenhang hat sich das erfindungsgemäße Verfahren besonders bewährt.

Es liegt im Rahmen der Erfindung, dass der Behälter unter Wasser beladen wird, insbesondere unter Wasser mit abgebrannten Brennelementen beladen wird und dass im Rahmen des erfindungsgemäßen Verfahrens der Behälter zunächst entwässert bzw. mechanisch entwässert wird. Erfindungsgemäß wird nach der Entwässerung bzw. nach der mechanischen Entwässerung des Behälterinnenraumes zunächst eine Vakuumtrocknung des Behälterinnenraumes durchgeführt und erst im Anschluss daran die Entfernung des restlichen Wassers aus dem Behälterinnenraum mit dem erfindungsgemäßen Trocknungsmittel durchgeführt. Gemäß einer empfohlenen Ausführungsvariante der Erfindung wird der Behälterinnenraum nach der Vakuumtrocknung mit Heliumgas befüllt. Bewährtermaßen wird der Behälterinnenraum bis zu einem Innendruck von 400 hPa bis 1.000 hPa, vorzugsweise von 600 hPa bis 1.000 hPa und insbesondere von 750 hPa bis 950 hPa mit Heliumgas befüllt.

Es liegt im Rahmen der Erfindung, dass das Trocknungsmittel bzw. das Calciumoxid nach der Vakuumtrocknung in den Behälterinnenraum mittels zumindest einer Filterkerze eingebracht wird und dass die Trocknung bei geschlossenem Behälter mit der Filterkerze durchgeführt wird. Dabei erstreckt sich die Filterkerze vorzugsweise in Längsrichtung des Behälterinnenraumes des Behälters. Gemäß einer Ausführungsvariante kann sich die Filterkerze über die gesamte Höhe bzw. Länge des Behälterinnenraumes erstrecken. Nach einer anderen bevorzugten Ausführungsform erstreckt sich die Filterkerze über lediglich einen Teil der Länge bzw. Höhe des Behälterinnenraumes.

Eine empfohlene Ausführungsform des erfindungsgemäßen Verfahrens zeichnet sich dadurch aus, dass das Trocknungsmittel bzw. das Calciumoxid und vorzugsweise die Filterkerze mit dem Trocknungsmittel bzw. mit dem Calciumoxid im oberen Drittel des Behälterinnenraumes, insbesondere im oberen Viertel des Behälterinnenraumes angeordnet wird. Gemäß einer besonders bevorzugten Ausführungsvariante des erfindungsgemäßen Verfahrens erfolgt die Anordnung im oberen Fünftel des Behälterinnenraumes. Der Begriff "oberen" bezieht sich dabei auf den aufgestellten Zustand des Behälters mit oberseitigem Deckel bzw. Primärdeckel.

Zur Lösung des technischen Problems lehrt die Erfindung weiterhin einen Transport- und/oder Lagerbehälter für radioaktive Abfälle, insbesondere für abgebrannte Brennelemente, gemäß Anspruch 5.

Zweckmäßigerweise liegt das Calciumoxid pulverförmig in dem Behälterinnenraum bzw. in der Trocknungseinrichtung vor.

Erfindungsgemäß ist das Trocknungsmittel bzw. das Calciumoxid in zumindest einer, insbesondere in einer Filterkerze aufgenommen. Vorzugsweise ist die Filterkerze im oberen Drittel, insbesondere im oberen Viertel und besonders bevorzugt im oberen Fünftel des Behälterinnenraumes fixiert, beispielsweise aufgehängt. Wie oben bereits dargelegt, bezieht sich oberes Drittel bzw. oberes Viertel und oberes Fünftel auf den aufgestellten Zustand des Behälters mit oberseitigem Deckel bzw. Primärdeckel. Es liegt im Rahmen der Erfindung, dass sich die Länge der Filterkerze über das obere Fünftel bzw. etwa über das obere Fünftel des Tragkorbes in dem Behälterinnenraum erstreckt. Ein solcher Tragkorb dient wie üblich zur Aufnahme von abgebrannten Brennelementen. Empfohlenermaßen weist die Filterkerze einschließlich zumindest einer Befestigungskomponente eine Länge von 800 bis 1.200 mm, insbesondere von 900 bis 1.100 mm auf.

Es liegt im Rahmen der Erfindung, dass die Filterkerze einen von wasserdampfdurchlässigen Wänden begrenzten Aufnahmeraum für das Trocknungsmittel, insbesondere für das Calciumoxid aufweist. Zweckmäßigerweise bestehen die wasserdampfdurchlässigen Wände der Filterkerze aus einem Sintermetall bzw. im Wesentlichen aus einem Sintermetall. Dabei handelt es sich beispielsweise um austenitischen nichtrostenden Stahl als Sintermetall. Es empfiehlt sich, dass die wasserdampfdurchlässigen Wände der Filterkerze bzw. die Wände aus Sintermetall eine Porenweite von 1 bis 15 µm, insbesondere von 2 bis 12 µm und bevorzugt von 4 bis 12 µm aufweisen. Zweckmäßigerweise beträgt die Wanddicke der wasserdampfdurchlässigen Wände der Filterkerze bzw. der aus Sintermetall bestehenden Wände 0,5 bis 6 mm, insbesondere 1 bis 5 mm und bevorzugt 1,5 bis 3 mm. Der Außendurchmesser der Filterkerze - zweckmäßigerweise gemessen in horizontaler Richtung im fixierten Zustand der Filterkerze - beträgt vorzugsweise 25 bis 60 mm, insbesondere 30 bis 50 mm und beispielsweise 35 bis 45 mm. Gemäß einer zweckmäßigen Ausführungsform der Erfindung beträgt das Beladevolumen der Filterkerze 600 bis 1.200 ml insbesondere 700 bis 1.100 ml und bevorzugt 800 bis 1.000 ml.

Es liegt im Rahmen der Erfindung, dass der Behälter mittels eines Primärdeckels verschlossen ist. Zweckmäßigerweise ist die Filterkerze an der Unterseite des Primärdeckels fixiert.

Das freie Volumen des Behälterinnenraumes eines erfindungsgemäßen Transport- und/oder Lagerbehälters beträgt vorzugsweise 2 bis 8 m³, insbesondere 3 bis 6 m³. Freies Volumen des Behälters meint dabei insbesondere das Innenraumvolumen des Behälters ohne Tragkorb und ohne Brennelemente. Es hat sich bewährt, dass zur Entfernung der Restwassermenge aus einem Behälter bzw. insbesondere aus einem Behälter mit dem vorgenannten freien Volumen 700 bis 1.200 g Trocknungsmittel und insbesondere 700 bis 900 g Trocknungsmittel bzw. Calciumoxid eingesetzt werden. Eine in den Behälter eingeführte Filterkerze nimmt zweckmäßigerweise 700 bis 1.200 g, insbesondere 700 bis 900 g Trocknungsmittel bzw. Calciumoxid auf. Es liegt im Rahmen der Erfindung, dass die Wasserdampfaufnahmekapazität einer Filterkerze bzw. einer solchen Filterkerze 200 bis 400 g, insbesondere 210 bis 300 g Wasserdampf beträgt. Um einen ausreichenden Trocknungsgrad im Behälterinnenraum feststellen zu können, wird zweckmäßigerweise eine Messung des Druckanstiegs im geschlossenen Behälter durchgeführt.

Der Erfindung liegt die Erkenntnis zugrunde, dass mit dem erfindungsgemäßen Verfahren und mit dem erfindungsgemäßen Transport- und/oder Lagerbehälter eine einfache, wenig aufwendige sowie funktionssichere und effiziente Trocknung des Behälterinnenraumes möglich ist. Restwassermengen im Behälterinnenraum lassen sich problemlos und funktionssicher fast vollständig entfernen. Im Behälter physikalisch und chemisch gebundenes Wasser wird nahezu vollständig von dem Trocknungsmittel bzw. von dem Calciumoxid absorbiert. Der Erfindung liegt die Erkenntnis zugrunde, dass die Wasserbindungsrate von Calciumoxid ausreicht, um die in dem Behälter freiwerdende Wassermenge aufzunehmen. Hervorzuheben ist, dass die Durchführung des erfindungsgemäßen Verfahrens relativ kostengünstig ist. Vor allem hält sich der apparative Aufwand für die Trocknung des Behälterinnenraumes in Grenzen. Weiterhin zeichnet sich das erfindungsgemäße Verfahren durch eine geringe Störanfälligkeit aus. Das Verfahren eignet sich insbesondere für Behälter mit höherer bzw. hoher Wärmeleistung. Insoweit weist das erfindungsgemäße Verfahren und weist der erfindungsgemäße Behälter beachtliche Vorteile gegenüber den aus der Praxis bekannten Maßnahmen auf.

Nachfolgend wird die Erfindung anhand einer lediglich ein Ausführungsbeispiel darstellenden Zeichnung näher erläutert. Es zeigen in schematischer Darstellung:
- Fig. 1: Eine Seitenansicht des erfindungsgemäßen Transport- und/oder Lagerbehälters im Schnitt und
- Fig. 2: eine Seitenansicht einer Filterkerze für das erfindungsgemäße Verfahren bzw. für den erfindungsgemäßen Behälter im Schnitt.

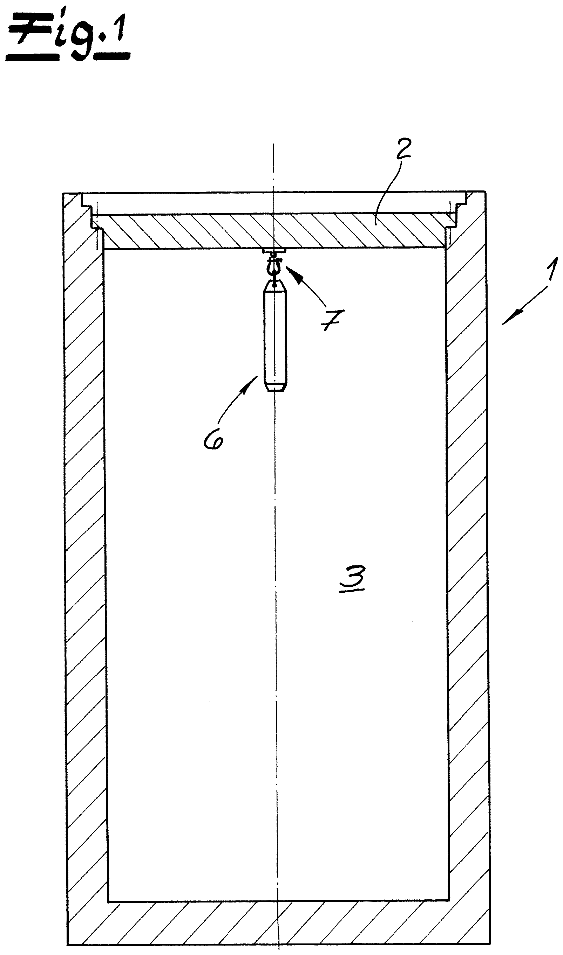

In der Fig. 1 ist ein erfindungsgemäßer Transport- und/oder Lagerbehälter 1 dargestellt, der mit einem nicht dargestellten Tragkorb mit abgebrannten Brennelementen beladen wurde. Die Beladung erfolgte unter Wasser und der Behälter 1 wurde zunächst entwässert bzw. mechanisch entwässert.

Zweckmäßigerweise und im Ausführungsbeispiel ist auf den Behälter 1 ein Primärdeckel 2 zum Verschluss des Behälters 1 aufgebracht. Bevorzugt und im Ausführungsbeispiel wurde zunächst eine Vakuumtrocknung des Behälterinnenraumes 3 des Behälters 1 durchgeführt.

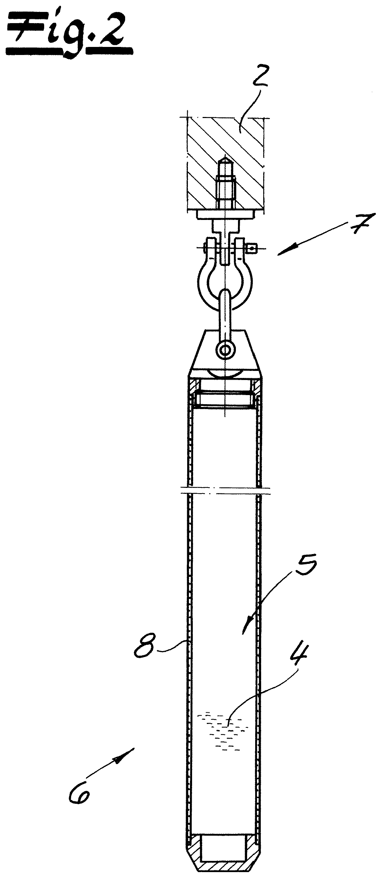

Zur Entfernung des restlichen Wassers aus dem Behälterinnenraum 3 wird erfindungsgemäß ein festes Trocknungsmittel 4 eingesetzt, das nach bevorzugter Ausführungsform pulverförmiges Calciumoxid ist. Dabei ist empfohlenermaßen und im Ausführungsbeispiel dieses Trocknungsmittel 4 bzw. das pulverförmige Calciumoxid in dem Aufnahmeraum 5 eine Filterkerze 6 aufgenommen. Diese Filterkerze 6 ist in der Fig. 2 detaillierter dargestellt.

Vorzugsweise und im Ausführungsbeispiel ist die Filterkerze 6 im oberen Fünftel des Behälterinnenraumes 3 des Behälters 1 angeordnet. Bewährtermaßen und im Ausführungsbeispiel ist die Filterkerze 6 an der Unterseite des Primärdeckels 2 über eine Befestigungsvorrichtung 7 aufgehängt. Es liegt im Rahmen der Erfindung, dass die den Aufnahmeraum 5 der Filterkerze 6 begrenzenden Wände wasserdampfdurchlässig sind. Zweckmäßigerweise und im Ausführungsbeispiel bestehen diese wasserdampfdurchlässigen Wände aus einem Sintermetall. Dabei mag es sich nach einer Ausführungsvariante der Erfindung um austenitischen nicht rostenden Stahl handeln. Die wasserdampfdurchlässigen Wände 8 der Filterkerze 6 haben nach bevorzugter Ausführungsform eine Wanddicke zwischen 1 und 5 mm und weisen empfohlenermaßen eine Porenweite zwischen 2 und 12 µm auf. Bewährtermaßen und im Ausführungsbeispiel hat die Filterkerze 6 einschließlich der Befestigungsvorrichtung 7 eine Länge von etwa 800 bis 1.200 mm, insbesondere von 900 bis 1.100 mm.

Das freie Volumen des Behälterinnenraumes 3 des erfindungsgemäßen Behälters 1 beträgt zweckmäßigerweise 2 bis 8 m³, insbesondere 3 bis 6m³. Freies Volumen des Behälters 1 meint dabei insbesondere das Innenraumvolumen des Behälters 1 ohne Tragkorb und ohne Brennelemente. Der Durchmesser bzw. der Außendurchmesser der Filterkerze 6 entspricht lediglich einem Bruchteil des Innendurchmessers des Behälterinnenraumes 3. Die Durchmesser werden dabei zweckmäßigerweise in horizontaler Richtung bei aufgestelltem Behälter 1 gemessen. Nach einer empfohlenen Ausführungsvariante der Erfindung beträgt der Außendurchmesser der Filterkerze 6 weniger als ein Sechstel und bevorzugt weniger als ein Achtel des Innendurchmessers des Behälterinnenraumes 3.

## Patentansprüche

1. Verfahren zur Trocknung von Transport- und/oder Lagerbehältern (1) für radioaktive Abfälle, insbesondere für abgebrannte Brennelemente, wobei der Behälter (1) einen Primärdeckel (2), einen unterhalb des Primärdeckels (2) angeordneten Behälterinnenraum (3) und einen Tragkorb aufweist,
wobei der Behälter (1) zunächst entwässert bzw. mechanisch entwässert wird und wobei nach der Entwässerung bzw. nach der mechanischen Entwässerung des Behälterinnenraumes (3) zunächst eine Vakuumtrocknung des Behälterinnenraumes (3) durchgeführt wird,
wobei erst nach der Vakuumtrocknung im Anschluss daran zur Entfernung des restlichen Wassers aus dem Behälterinnenraum (3) - insbesondere zur Entfernung von physikalisch und/oder chemisch gebundenem Wasser - zumindest ein festes Trocknungsmittel (4) in den Behälterinnenraum (3) eingeführt wird
**dadurch gekennzeichnet, dass** das feste Trocknungsmittel (4) Calciumoxid ist und dass das Trocknungsmittel (4) mittels zumindest einer Filterkerze (6) in den Behälterinnenraum (3) eingebracht wird.

2. Verfahren nach Anspruch 1, wobei der Behälterinnenraum (3) nach der Vakuumtrocknung mit Heliumgas befüllt wird.

3. Verfahren nach Anspruch 2, wobei der Behälterinnenraum (3) bis zu einem Innendruck von 400 hPa bis 1.000 hPa, insbesondere von 750 hPa bis 950 hPa mit Heliumgas befüllt wird.

4. Verfahren nach einem der Ansprüche 1 bis 3, wobei die Filterkerze (6) mit dem Trocknungsmittel (4) im oberen Drittel des Behälters (1), insbesondere im oberen Viertel des Behälters (1) angeordnet wird.

5. Transport- und/oder Lagerbehälter (1) für radioaktive Abfälle, insbesondere für abgebrannte Brennelemente, wobei der Behälter (1) einen Primärdeckel (2) einen unterhalb des Primärdeckels (2) angeordneten Behälterinnenraum (3) und einen Tragkorb aufweist,
wobei in dem Behälter (1) zur Entfernung des restlichen Wassergehaltes nach einer mechanischen Entwässerung und nach einer darauffolgenden Vakuumtrocknung des Behälterinnenraumes (3) zumindest eine Trocknungseinrichtung mit zumindest einem Trocknungsmittel (4) eingeführt ist **dadurch gekennzeichnet, dass** das Trocknungsmittel (4) Calciumoxid ist und dass das Calciumoxid mittels zumindest einer Filterkerze (6) in den Behälterinnenraum (3) eingebracht ist.

6. Transport- und/oder Lagerbehälter (1) nach Anspruch 5, wobei das Calciumoxid
pulverförmig vorliegt.

7. Transport- und/oder Lagerbehälter (1) nach einem der Ansprüche 5 oder 6, wobei die Filterkerze (6) vorzugsweise im oberen Drittel, insbesondere im oberen Viertel und bevorzugt im oberen Fünftel des Behälterinnenraumes (3) fixiert ist, insbesondere aufgehängt ist.

8. Transport- und/oder Lagerbehälter (1) nach Anspruch 7, wobei die Filterkerze (6) einen von wasserdampfdurchlässigen Wänden (8) begrenzten Aufnahmeraum (5) für das Calciumoxid aufweist und wobei die wasserdampfdurchlässigen Wände (8) der Filterkerze (6) vorzugsweise aus einem Sintermetall bestehen bzw. im Wesentlichen bestehen.

9. Transport- und/oder Lagerbehälter (1) nach Anspruch 8, wobei die wasserdampfdurchlässigen Wände (8) der Filterkerze (6) eine Wanddicke von 0,5 mm bis 6 mm, insbesondere von 1 mm bis 5 mm aufweisen und vorzugsweise eine Porenweite von 1 µm bis 15 µm, insbesondere von 2 µm bis 12 µm und vorzugsweise von 4 µm bis 12 µm aufweisen.

## Claims

1. A method for drying transport and/or storage containers (1) for radioactive waste, in particular for spent fuel assemblies, wherein the container (1) comprises a primary lid (2), a container interior (3) arranged beneath the primary lid (2) and a carrier basket,
wherein the container (1) is first dewatered or mechanically dewatered and wherein, after the dewatering or after the mechanical dewatering of the container interior (3), vacuum drying of the container interior (3) is then carried out,
wherein, only after the vacuum drying and following the latter, at least one solid desiccant (4) is introduced into the container interior (3) for the removal of the residual water from the container interior (3) - in particular for the removal of physically and/or chemically bound water, **characterised in that** the solid desiccant (4) is calcium oxide
and that the desiccant (4) is introduced into the container interior (3) by means of at least one filter candle (6).

2. The method according to claim 1, wherein the container interior (3) is filled with helium gas after the vacuum drying.

3. The method according to claim 2, wherein the container interior (3) is filled with helium gas up to an internal pressure of 400 hPa to 1000 hPa, in particular 750 hPa to 950 hPa.

4. The method according to any one of claims 1 to 3, wherein the filter candle (6) with the desiccant (4) is arranged in the upper third of the container (1), in particular in the upper quarter of the container (1).

5. A transport and/or storage container (1) for radioactive waste, in particular for spent fuel assemblies,
wherein the container (1) comprises a primary lid (2), a container interior (3) arranged beneath the primary lid (2) and a carrier basket,
wherein, after the mechanical dewatering and after subsequent vacuum drying of the container interior (3), at least one drying arrangement with at least one desiccant (4) is introduced into the container (1) for the removal of the residual water content, **characterised in that** the desiccant (4) is calcium oxide and that the calcium oxide is introduced into the container interior (3) by means of at least one filter candle (6).

6. The transport and/or storage container (1) according to claim 5, wherein the calcium oxide is present in powder form.

7. The transport and/or storage container (1) according to any one of claims 5 or 6, wherein the filter candle (6) is preferably fixed, in particular suspended, in the upper third, in particular in the upper quarter, and preferably in the upper fifth of the container interior (3).

8. The transport and/or storage container (1) according to claim 7, wherein the filter candle (6) comprises a receiving space (5) for the calcium oxide bounded by water vapour-permeable walls (8) and wherein the water vapour-permeable walls (8) of the filter candle (6) are preferably made or essentially made of a sintered metal.

9. The transport and/or storage container (1) according to claim 8, wherein the water vapour-permeable walls (8) of the filter candle (6) have a wall thickness of 0.5 mm to 6 mm, in particular of 1 mm to 5 mm and preferably a pore width of 1 µm to 15 µm, in particular 2 µm to 12 µm and preferably of 4 µm to 12 µm.

## Revendications

1. Procédé pour le séchage de récipients de transport et/ou de stockage (1) pour des déchets radioactifs, en particulier pour des éléments combustibles brûlés, dans lequel le récipient (1) présente un couvercle primaire (2), un espace intérieur de récipient (3) disposé sous le couvercle primaire (2) et un panier de transport, dans lequel le récipient (1) est tout d'abord drainé ou drainé mécaniquement et dans lequel un séchage sous vide de l'espace intérieur de récipient (3) est effectué après le drainage ou après le drainage mécanique de l'espace intérieur de récipient (3),
dans lequel au moins un moyen de séchage fixe (4) est ensuite introduit dans l'espace intérieur de récipient (3) pour l'évacuation de l'eau résiduelle hors de l'espace intérieur de récipient (3) - en particulier pour l'évacuation d'eau liée physiquement et/ou chimiquement -,
**caractérisé en ce que** le moyen de séchage fixe (4) est de l'oxyde de calcium et **en ce que** le moyen de séchage (4) est introduit dans l'espace intérieur de récipient (3) à l'aide d'au moins une bougie filtrante (6).

2. Procédé selon la revendication 1, dans lequel l'espace intérieur de récipient (3) est rempli avec de l'hélium gazeux après le séchage sous vide.

3. Procédé selon la revendication 2, dans lequel l'espace intérieur de récipient (3) est rempli avec de l'hélium gazeux jusqu'à une pression interne de 400 hPa à 1000 hPa, en particulier de 750 hPa à 950 hPa.

4. Procédé selon l'une des revendications 1 à 3, dans lequel la bougie filtrante (6) avec le moyen de séchage (4) est disposée dans le tiers supérieur du récipient (1), en particulier dans le quart supérieur du récipient (1) .

5. Récipient de transport et/ou de stockage (1) pour des déchets radioactifs, en particulier pour des éléments combustibles brûlés,
dans lequel le récipient (1) présente un couvercle primaire (2), un espace intérieur de récipient (3) disposé sous le couvercle primaire (2) et un panier de transport,
dans lequel, pour l'évacuation de la teneur en eau résiduelle, au moins un dispositif de séchage avec au moins un moyen de séchage (4) est introduit dans le récipient (1) après un drainage mécanique et après un séchage sous vide consécutif de l'espace intérieur de récipient (3),
**caractérisé en ce que** le moyen de séchage (4) est de l'oxyde de calcium et **en ce que** l'oxyde de calcium est introduit dans l'espace intérieur de récipient (3) à l'aide d'au moins une bougie filtrante (6).

6. Récipient de transport et/ou de stockage (1) selon la revendication 5, dans lequel l'oxyde de calcium est présente sous forme de poudre.

7. Récipient de transport et/ou de stockage (1) selon l'une des revendications 5 ou 6, dans lequel la bougie filtrante (6) est fixée, en particulier accrochée, dans le tiers supérieur, en particulier dans le quart supérieur et de préférence dans le cinquième supérieur de l'espace intérieur de récipient (3).

8. Récipient de transport et/ou de stockage (1) selon la revendication 7, dans lequel la bougie filtrante (6) présente un espace de réception (5) pour l'oxyde de calcium, lequel est délimité par des parois perméables à la vapeur d'eau (8), et dans lequel les parois perméables à la vapeur d'eau (8) de la bougie filtrante (6) sont de préférence constituées ou constituées essentiellement d'un métal fritté.

9. Récipient de transport et/ou de stockage (1) selon la revendication 8, dans lequel les parois perméables à la vapeur d'eau (8) de la bougie filtrante (6) présentent une épaisseur de paroi de 0,5 mm à 6 mm, en particulier de 1 mm à 5 mm et de préférence une largeur de pores de 1 µm à 15 µm, en particulier de 2 µm à 12 µm et de préférence de 4 µm à 12 µm.
